# EUROPEAN PATENT SPECIFICATION

(11) **EP 3 999 805 B1**
(45) Date of publication and mention of the grant of the patent: **06.09.2023**
(21) Application number: 20760940.5
(22) Date of filing: 17.07.2020
(51) Int. Cl.: G01C 15/02, E01B 1/00, B61B 1/00

(54) **POLE, INSTALLABLE ALONG THE SIDES OF A RAILWAY LINE, FOR THE EXECUTION OF TOPOGRAPHICAL SURVEYS DIRECTED TO VERIFY THE TRACK LAYOUT OF THE RAILWAY LINE, AND CORRESPONDING OPTICAL MEASURING TOOL AND SYSTEM, AND USE**
MAST, DER ENTLANG DER SEITEN EINER EISENBAHNLINIE INSTALLIERT WERDEN KANN, FÜR DIE DURCHFÜHRUNG VON TOPOGRAFISCHEN VERMESSUNGEN ZUM ÜBERPRÜFEN DES GLEISVERLAUFS DER EISENBAHNLINIE UND ENTSPRECHENDES OPTISCHES MESSWERKZEUG UND -SYSTEM UND VERWENDUNG
POTEAU, POUVANT ÊTRE INSTALLÉ LE LONG DES BORDS D'UNE LIGNE DE CHEMIN DE FER, POUR L'EXÉCUTION D'ÉTUDES TOPOGRAPHIQUES VISANT À VÉRIFIER LA DISPOSITION DES VOIES DE LA LIGNE DE CHEMIN DE FER, ET OUTIL ET SYSTÈME DE MESURE OPTIQUE CORRESPONDANTS, ET UTILISATION

(30) Priority: 19.07.2019 IT 201900012435
(43) Date of publication of application: 25.05.2022
(73) Proprietor: Virgenti, Nicola, 43039 Salsomaggiore Terme (PR) (IT)
(72) Inventor: Virgenti, Nicola, 43039 Salsomaggiore Terme (PR) (IT)
(86) International application number: PCT/IT2020/050178
(87) International publication number: WO 2021/014475

(56) References cited:
- JP-A- H0 882 524
- JP-A- 2009 031 017
- JP-A- 2012 032 330
- US-A- 1 388 031
- Anonymous: "Bayonet mount - Wikipedia", Wikipedia, 29 May 2019 (2019-05-29), XP055684465, Retrieved from the Internet: URL:https://en.wikipedia.org/w/index.php?t itle=Bayonet_mount&oldid=899225808 [retrieved on 2020-04-08]

## Description

### Technical field

The present invention relates in general to the field of equipment and systems designed to make transport and movements safe by railway, and more particularly it relates to a new and innovative screw pole, suitable to be installed along the sides of a railway line, to be used in the execution of topographic measurements and surveys aimed at periodically checking, for safety reasons, the correct layout and positioning of the tracks of a railway line.

The present invention also relates to a corresponding optical measuring device or tool and to a wider optical measuring system for carrying out topographical measurements and surveys aimed at periodically controlling and checking over time, for safety purposes, the layout and geometry of the tracks of a railway line.

### Background art

As it is known, an active railway line, i.e. normally used to make trains run along it, must be periodically checked and verified, for obvious safety reasons, in order to verify with absolute certainty that the tracks of the railway line have not moved over time from their correct initial layout, as a consequence of any cause, and therefore to ensure that the railway line is safe, that is, the trains can pass safely along it without the danger of derailing or encountering other drawbacks due to incorrect positioning of the respective railway tracks.

These checks are carried out by means of special equipments or apparatuses, usually based on optical measurement systems, which are positioned, if necessary, adjacent to the railway line to be checked, and which have justly the purpose of carrying out a series of topographical measurements and surveys directed to check and control accurately whether the tracks of the railway line are still correctly positioned within the permitted tolerable range so as to ensure the safety of the same railway line, or if instead the tracks have moved in time in an unacceptable way from their correct position, due to the most varied causes and factors, such as for example the continuous and relevant stresses to which the tracks are subjected by effect of the transit of trains or the collapse of the ballast, i.e. the gravel ballast on which the railway tracks are installed .

More in detail, these optical measuring systems operate by measuring both the position and the spatial coordinates of certain fixed reference points, which have been preliminarily established along the path of the railway line to be controlled, usually in areas outside the respective tracks, and the position and spatial coordinates of corresponding given reference points established on the tracks of the same railway line, in order to determine and calculate precisely from these measurements, in particular with triangulation procedures and formulas, the effective distance between the reference points external to the tracks and those positioned and defined on the tracks.

It is then checked whether the effective distance, thus calculated, has changed or not over time, i.e. whether it is still in accordance with the correct initial distance, in turn corresponding to the correct initial configuration or layout of the railway tracks, so as to guarantee the safety of the railway line, or if for any cause or reason such effective distance is varied and therefore deviates in an unacceptable manner from the correct one.

Therefore, in this way, the optical measuring system provides the information necessary to establish whether the tracks of the railway line are still correctly positioned, as at the time of their initial installation, within the permissible tolerance range, whereby it is not necessary to intervene for repositioning them since the railway line is in safe conditions, or if on the contrary the tracks are no longer correctly positioned, so that action must be taken to reposition them correctly.

In order to detect with absolute precision both the position and the spatial coordinates of the reference points outside the tracks and the position and the spatial coordinates of the reference points defined on the tracks of the railway line, to be used in the calculations and in the triangulation procedures aimed at detecting the actual and effective layout of the railway tracks, these optical measurement systems advantageously make use of and are associated with satellite positioning systems of the GPS type (from Global Positioning System).

In the case of electrified railway lines, usually the reference points, external to the tracks, whose position is detected by the optical measuring system, are established using fixed structures, for example the pylons of the electrification system of the railway line, and usually correspond to notches that are defined on such fixed structures and pylons installed at the sides of the electrified railway line.

Instead, in the case of non-electrified railway lines, since there are usually no fixed structures, such as poles or pylons, installed at the sides and along the railway line, the reference points, external to the tracks, which are detected by the optical measuring system, are defined by poles or stakes or similar elements and structures that are suitably installed at regular intervals along the sides of the non-electrified railway line to be checked.

The current technique proposes different embodiments of these poles or stakes, which can be installed along the sides of a railway line, capable of acting as reference points for the execution of topographic surveys aimed at verifying the layout and geometry of the tracks of the same railway line.

In particular, some of these known poles have a foundation consisting of a concrete plinth that is made in the ground and that acts as a support for the actual pole which defines the reference point that is detected by the optical measuring system to verify the track layout of the railway line.

However these known poles imply, since they comprise a foundation consisting of a plinth or a similar structure made in the ground, a long and expensive construction.

Other types of poles or posts are also known, but they suffer from the inconvenience of implying a construction and installation that are long and consequently expensive.

Therefore, in the context illustrated above and in an attempt to go beyond the limits and remedy the drawbacks still present in the prior art, the inventor realized that it was possible to develop effective and significant improvements, at the basis of the present invention, concerning the poles, installed along a railway line, to be used for the execution of topographic surveys aimed at verifying the correct configuration and layout of the respective railway tracks.

JPH0882524 discloses a surveying pole including a rod-shape body that can be screwed to the ground and marking that can be mounted on the pole that is left exposed when the rod-shape body is screwed to the ground.

### Disclosure of invention

Therefore a main object of the present invention is to propose and provide a new pole, which can be installed at regular intervals along the sides of a railway line, for the execution of topographic measurements and surveys aimed at verifying the layout and geometry of the tracks of the railway line, wherein this new pole constitutes an effective improvement and progress with respect to the poles, stakes and other similar elements and structures, currently used, that are installed for this purpose along the sides of a railway line and are offered by the known art.

Another object of the present invention, more specific but still connected to the primary one illustrated above, is also to propose a pole, for the execution of topographic measurements and surveys aimed at verifying the layout of the tracks of a railway line, which, once installed at the sides of it, does not require substantially maintenance and is also able to guarantee over time a correct and repeatable positioning of the optical measuring system used to perform the topographic surveys of the track layout of the railway line, in order to reduce and optimize the costs for the management over time of these poles for topographic surveys installed along the sides of the railway line.

A further object of the present invention can also be recognized in that of developing a pole, for the execution of topographic measurements and surveys aimed at checking the layout and geometry of the tracks of the railway line, which pole is suitable for rapid installation and without requiring particular preparation works, such as a plinth or others, in the ground along the sides of the railway line, so as to significantly reduce the respective installation costs.

Another object of the present invention is to develop and offer an optical measuring device or tool and a wider optical measuring system which allow to measure the spatial coordinates and therefore to detect with great precision the position of the reference points, defined along a railway line, which are used to perform topographic surveys of the tracks of the same railway line.

The above objects can be considered fully achieved by the screw pole which has the characteristics recited by the independent main claim 1, by the corresponding optical measuring device or tool recited by the independent claim 2, by the corresponding optical measuring system having the characteristics recited by the claim 7.

Particular embodiments of the screw pole, according to the present invention, and of the corresponding optical measuring device or tool, and optical measuring system are further defined by the dependent claims.

### Advantages of the invention

As it will become clear from the following description, the screw pole and the other aspects of the present invention, such as the optical measuring device or tool and the wider optical measuring system, for the execution of topographic surveys of the tracks of a railway line, offer a series of relevant and unique advantages, some of which have already been illustrated above, among which the following ones are mentioned purely by way of example:
- a fast and practical installation, therefore with significantly reduced costs, of the screw pole at the sides of the railway line, in particular thanks to the absence of plinths and similar foundations built in the ground;
- a precise and repeatable survey over time of the reference point defined by the optical measuring tool fixed to the screw pole screwed into the ground at the sides of the railway line;
- therefore a corresponding precise topographical survey of the layout and geometry of the railway tracks;
- reduced execution times for topographic surveys of the actual track layout of the railway tracks;
- easy portability of the instruments, such as the optical measuring device or tool to be fixed to the screw pole screwed into the ground, used to perform the topographic surveys;
- limited maintenance costs over time of the screw pole screwed into the ground.

### Brief description of the drawings

These and other objects, characteristics and advantages of the present invention will become apparent from the following description of some preferred embodiments and uses thereof, given purely by way of non-limiting examples with reference to the attached drawings, in which:
Figs. 1A and 1B are schematic diagrams showing a screw pole or post, in accordance with the present invention, installed along the sides of a railway line, for the execution of topographic surveys aimed at verifying and checking the layout and geometry of the respective railway tracks, wherein these diagrams also illustrate the general operating context in which the screw pole of the invention is used;
Fig. 2A, divided into sections (a) and (b), is formed by two graphical views showing the screw pole of the invention of Figs. 1A and 1B, for the execution of topographic surveys, respectively in assembled form and in separate form, that is with its essential parts, consisting of a threaded stem and an upper fixing plate, separated from each other;
Fig. 2B, divided into sections (a) and (b), shows an optical measuring device or tool, which can be coupled to the screw pole of the invention of Fig. 2A, wherein this optical measuring device or tool is part of and included in a wider optical measuring system for carrying out topographic measurements and surveys aimed at checking and controlling the layout of the tracks of the railway line;
Fig. 2C is a graphical view showing the screw pole of the invention of Fig. 2A and the optical measuring tool of Fig. 2B coupled together so as to constitute a reference and measuring pole;
Fig. 3, divided into sections (a)-(f), is a series of further graphic views, in an enlarged scale, of details and areas of the screw pole of the invention and of the optical measuring device or tool that can be coupled to the screw pole, and in particular of the coupling and fixing system between these two parts;
Fig. 4, divided into sections (a)-(h), is a series of images of the various parts and some details of a prototype of the screw pole of the invention and of the optical measuring device or tool that can be coupled and fixed to the screw pole, once screwed into the ground at the sides of the railway line;
Fig. 5 is a block operating diagram, which briefly illustrates the use of the screw pole of the invention that can be screwed into the ground along the sides of a railway line;
Fig. 6, divided into sections (a)-(e), is a series of images showing a spring-loaded variant of the coupling and fixing system of the optical measuring device or tool to the screw pole of the invention;
Fig. 7 is a block operating diagram that illustrates a further and advantageous use, alternative or complementary to that illustrated in Fig. 5, of the screw pole of the invention; and
Fig. 7A is a diagram corresponding to the block operating diagram of Fig. 7.

It is further noted that, in the following description of the screw pole and other aspects of the invention, the reference to a respective and specific embodiment and/or application and/or use does not exclude that a particular configuration or feature described in relation to such specific embodiment and/or application and/or use may also be included in other embodiments, applications and uses of the screw pole and of the other aspects of the invention which have not been described for synthesis reasons.

It follows that particular and specific configurations and/or structural and operational characteristics of the screw pole and other aspects of the invention can be combined in any appropriate and consistent manner in one or more embodiments, applications and uses.

Finally, it should be pointed out that the references below used to describe the invention only respond to convenience requirements and therefore do not in any way define the scope and object scope of the embodiments, uses and applications, which will be described, of the invention itself.

### Description of a preferred embodiment of the screw pole of the invention for the execution of topographic surveys of the track layout of a railway line

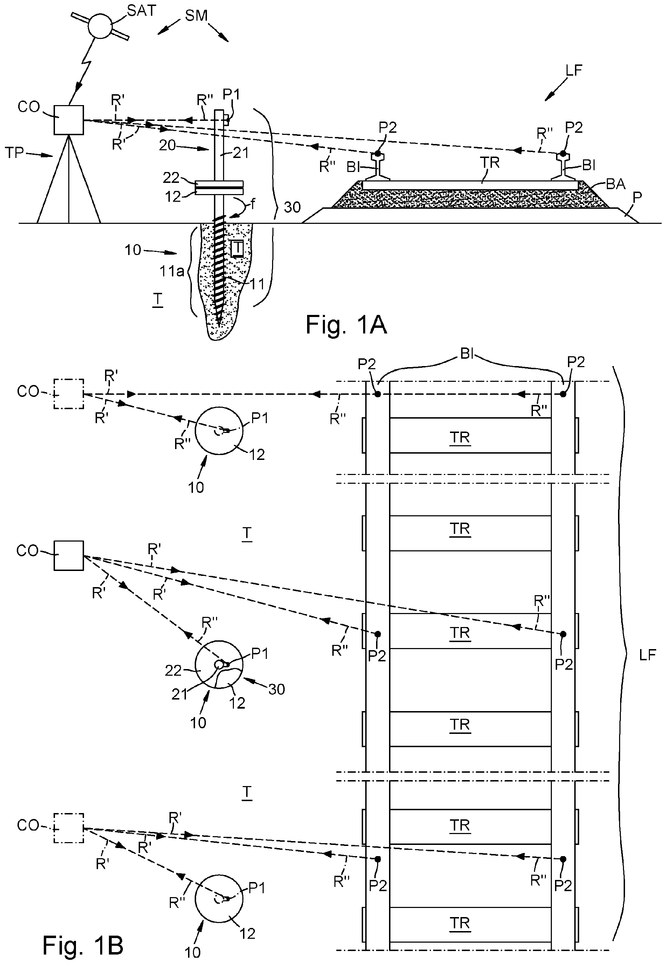

With reference to the drawings and in particular to Figs. 1A and 1B, a screw pole, according to the present invention, installable in the ground T along the sides of a railway line LF, wherein the screw pole is used in the execution of topographical measurements and surveys aimed at detecting the actual layout of the tracks BI of the same railway line LF, is generally indicated with 10.

The railway line LF at the sides of which the screw pole 10 is installed is typically, but not exclusively, of the non-electrified type, and includes a pair of tracks BI which extend along a given layout or path and are fixed on a plurality of sleepers TR .

As shown in Figs. 1A and 1B, that also illustrate the general operational context of which the screw pole 10 of the invention is an essential part and in which it is used for the purpose of carrying out the topographic surveys of the layout of the tracks BI, the screw pole 10 is installed, at regular intervals, in the ground T along one or both sides of the railway line LF, in the area of the ballast BA or adjacent to it, that is to the gravel ballast of the railway line LF, in turn formed on a base platform P of the same railway line LF.

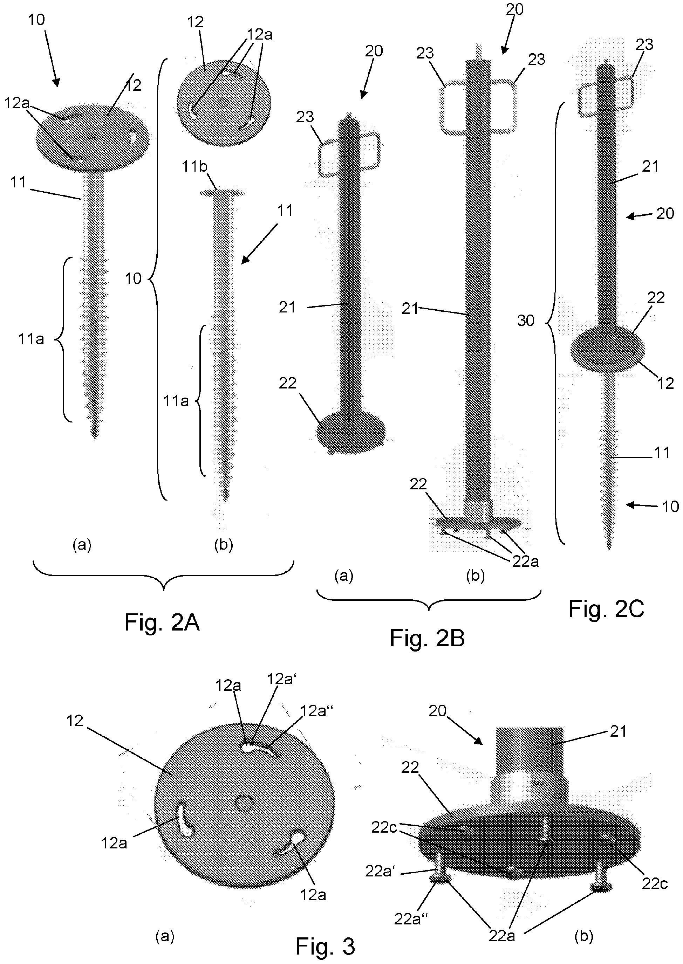

In detail, according to an essential feature of the present invention, the screw pole 10 comprises, as shown in Fig. 2A:
- a lower stem or shank, indicated with 11 and exhibiting along its axial extension a thread 11a suitable to allow the screw pole 10 to be screwed into the ground T along the sides of the railway line LF; and
- an upper plate, indicated with 12 and also called in the following upper fixing plate, which is fixed to an upper end 11b of the lower threaded stem 11.

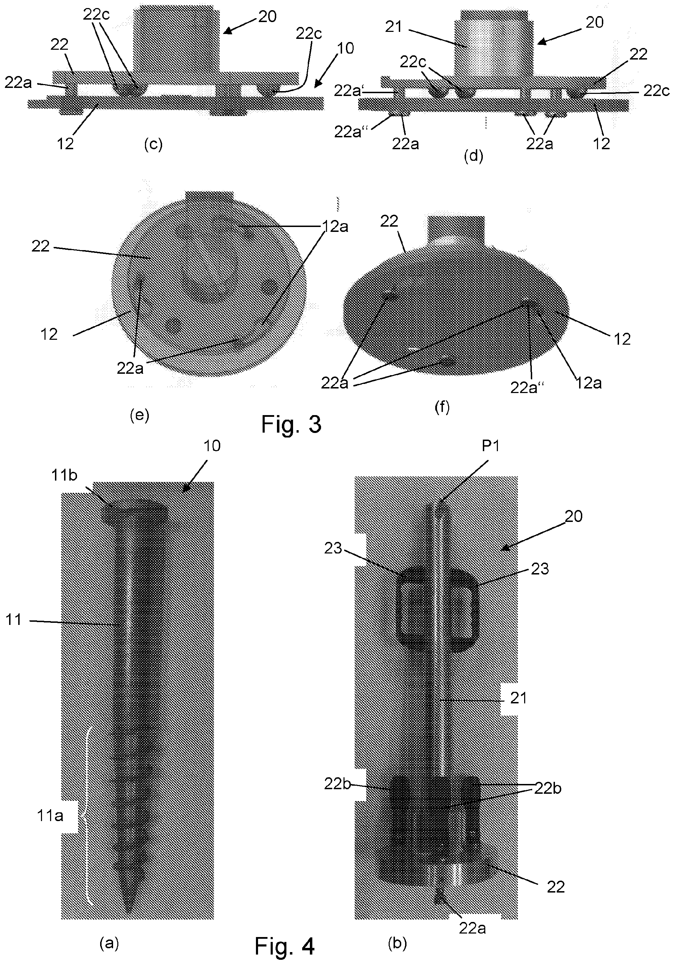

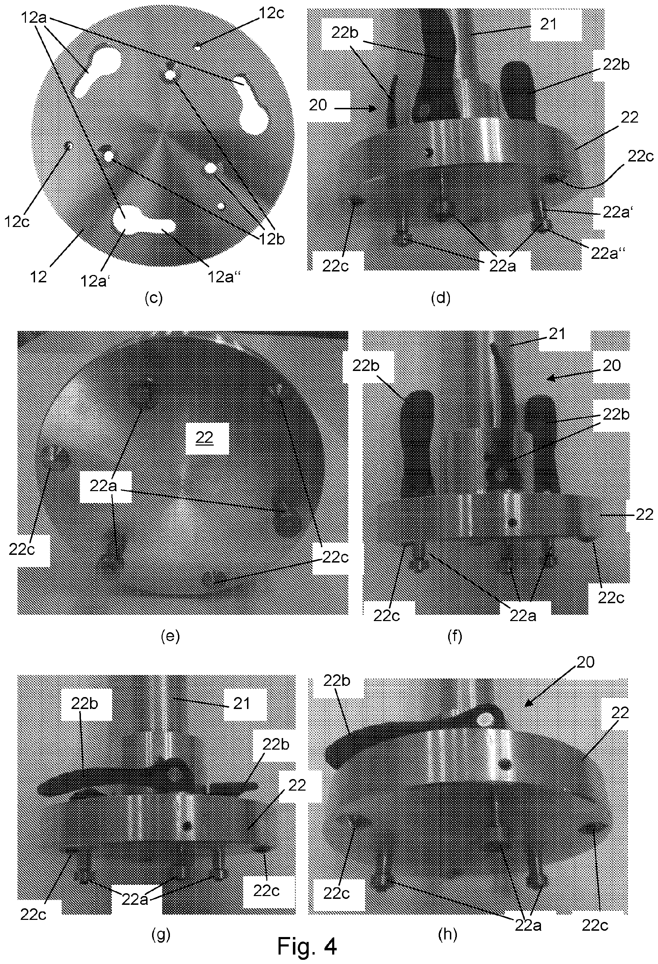

The upper plate 12, for example made of stainless steel, has three flared holes 12b, as shown in Fig. 4 - sect. (c), suitable to house three corresponding countersunk screws that secure and fix the upper plate 12 to the upper end 11b of the lower stem 11 of the screw pole 10.

Furthermore, the upper plate 12 is configured to receive and fix stably to the screw pole 10, when screwed into the ground T at the sides of the railway line LF, an optical measuring device or tool or instrument, hereinafter described in detail, indicated as a whole with 20 and shown in Fig. 2B, so as to constitute a reference and measuring pole, indicated as a whole with 30 and shown in Fig. 2C, which partially protrudes from the ground T, as shown in Fig. 1A.

For this purpose, the upper plate 12, fixed to the upper end 11b of the threaded lower stem 11 of the screw pole 10, has a plurality of slots 12a, for example three, suitable for receiving and cooperating with a plurality of corresponding pegs or pins of the optical measuring device or tool 20, in order to fix the latter to the screw pole 10 screwed into the ground T, as described in detail hereinafter.

In particular, each of these slots 12a has a wider portion, indicated with 12a', and a narrower portion, indicated with 12a", as shown in Fig. 3 - section (a) and in Fig. 4 - section (c).

The optical measuring device or tool 20, which can be coupled to the screw pole 10 screwed into the ground T at the sides of the railway line LF so as to form the reference and measuring pole 30 as a whole, in turn comprises;
- a cylindrical pole 21, also called measuring pole, in particular made of aluminium for reasons of lightness; and
- a lower plate 22, fixed to a lower end of the cylindrical pole 21;
wherein this lower plate 22 has a plurality of pins or pegs 22a, protruding from the same lower plate 22, which are adapted to be inserted into the slots 12a, defined by the upper plate 12 of the screw pole 10, in order to connect and fix the optical measuring device or tool 20 to the screw pole 10 screwed into the ground T, whereby in the coupling and fixing of the optical measuring device or tool 20 to the screw pole 10 the upper plate 12 of the screw pole 10 acts as a counter plate of the lower plate 22 of the optical measuring device or tool 20.

As shown in Fig. 3 - sect. (b) and in Fig. 4 - sect. (d), each peg 22a, protruding from the lower plate 22 of the optical measuring device or tool 20, consists of a stem 22a', of smaller diameter, and a head 22a", of greater diameter.

Thanks to this configuration, each peg 22a, protruding from the lower plate 22 of the optical measuring device or tool 20, is able to be inserted with its head 22a", of greater diameter, in the wider portion 12a 'of the corresponding slot 12a, formed in the upper plate 12 of the screw pole 10, and then to cooperate with its stem 22a', of smaller diameter, with the narrow portion 12a" of the same slot 12a, when the optical measuring device or tool 20 is rotated with respect to the screw pole 10 in order to connect these two parts to each other, as described in detail hereinafter.

The optical measuring device or tool 20 further comprises a pair of handles, each indicated with 23, to allow an operator to rotate the optical measuring device or tool 20 with respect to the screw pole 10, in order to couple and fix the optical measuring device or tool 20 to the screw pole 10 screwed into the ground T.

Furthermore, the optical measuring device or tool 20 comprises a plurality of levers, in particular three levers, each one indicated with 22b, associated with the pegs or pins 22a protruding from the lower plate 22, wherein these levers 22b can be operated manually by an operator, after the optical measuring device or tool 20 has been rotated with respect to the screw pole 10, so as to press the head 22a", of greater diameter, of each peg 22a against the upper plate 12 and therefore to lock and firmly fix to the screw pole 10, screwed into the ground T, the optical measuring device or tool 20, as described in detail below.

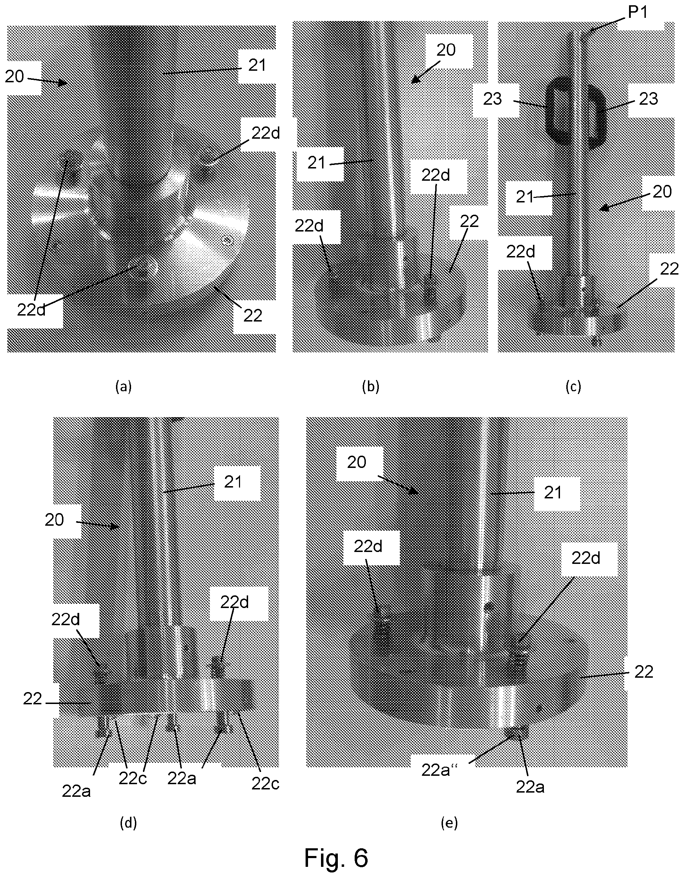

As shown by the images of Fig. 6, the optical measuring device or tool 20 can comprise, as an alternative to the levers 22b, in order to lock the same optical measuring device or tool 20 with respect to the screw pole 10, a plurality of spring-loaded couplings, in particular three, indicated with 22d, wherein each of these spring-loaded couplings 22d corresponds to a peg 22a, protruding from the lower plate 22 of the optical measuring device or tool 20, and operates, similarly to the lever 22b, so as to press the head 22a", of greater diameter, of the peg 22a against the plate 12, of the screw pole 10, after the optical device or measuring tool 20 has been rotated relative to the screw pole 10 screwed into the ground T.

Finally, the lower plate 22 of the optical measuring device or tool 20 has three half-spheres, each indicated by 22c, which act as supporting elements and spacers of the lower plate 22, of the optical measuring device or tool 20, from the upper plate 12 of the screw pole 10, when the optical measuring device or tool 20 is coupled and fixed to the screw pole 10 screwed into the ground T.

For a more complete and clear information, Fig. 4, divided into sections (a)-(h), shows a series of images of the various parts and some details of a prototype of the screw pole 10 of the invention and of the optical measuring device or tool 20 that can be coupled and fixed to the screw pole 10, once screwed into the ground T at the sides of the railway line LF.

Of course the dimensions of the screw pole 10, of the measuring device or tool 20 that can be coupled to the screw pole 10 screwed into the ground T, and of the reference and measuring pole 30, constituted by the screw pole 10 and by the optical measuring device or tool 20 coupled and fixed to each other, can vary according to the application, that is to the configuration of the ballast and the slope on which the railway line is built.

Indicatively, therefore without any limitative value, the salient dimensions of these parts are as follows:

| Size | Maximum range of variation [mm] | Preferred range of variation [mm] |
|---|---|---|
| axial extension of the screw pole 10 | 800-2.300 | 900-1.200 |
| axial extension of the optical measuring device or tool 20 | 800-1.500 | 900-1100 |
| axial extension of the reference and measuring pole 30 | 1.600-3.800 | 1.800-2.300 |
| diameter of the upper fixing plate 12, fixed to the lower stem 11 of the screw pole 10 | 180-250 | 190-200 |

The optical measuring device or tool 20, coupled and fixed to the screw pole 10 screwed into the ground T, is included in and essential part of a wider optical measuring system, indicated as a whole with SM, having the function of carrying out a series of measurements aimed at detecting the topography and the actual layout of the tracks BI of the railway line LF, as described in detail hereinafter illustrating the use of the screw pole 10.

In particular, the optical measuring device or tool 20, when coupled and fixed to the screw pole 10 screwed into the ground T at the sides of the railway line LF, has the function of establishing along the sides of the railway line LF a fixed reference point , indicated with P1, whose position is detected by the wider optical measuring system SM in order to detect the topography of the railway tracks Bl.

For example this reference point P1 can be defined by an optical prism PR, which is fixed to the measuring pole 21 of the optical measuring device or tool 20, in turn fixed to the screw pole 10 screwed into the ground T at the sides of the line railway LF, wherein this optical prism PR is adapted to receive and reflect a light beam emitted by the optical measuring system, as better described below.

The reference points P1, defined by the optical measuring device or tool 20 and intended to be detected by the optical measuring system SM, are typically more than one, for example six, even if for reasons of conciseness, a single reference point P1 is shown in the drawings.

The optical measuring system SM in turn comprises, as shown in Figs. 1A and 1B, in addition to the optical measuring device or tool 20 fixed to the screw pole 10 installed at the sides of the railway line LF, an optical control unit, indicated with CO, mounted on a tripod TP, wherein this optical control unit CO is mounted at the sides of the railway line LF to be checked, and moved if necessary along these sides, as represented by a dashed and dotted line in Fig. 1B, so as to cover the various sections, whose topographical layout must be detected, of the tracks BI of the railway line LF, as described in detail below illustrating the use of the screw pole 10 of the invention.

The optical control unit CO, essential part of the optical measuring system SM, operates, in order to detect the actual topography and geometry of the tracks BI of the railway line LF, in a substantially known way, emitting a light beam R', as shown in Figs. 1A and 1B, towards the fixed reference point P1, defined by the optical measuring device or tool 20 fixed to the screw pole 10 screwed into the ground T at the sides of the railway line LF, and then receiving the same light beam, indicated with R", reflected from the reference point P1, in order to accurately detect the position and the spatial coordinates of this reference point P1.

The optical control unit CO of the optical measuring system SM also operates in a similar way to detect the position of one or more reference points P2, defined on the railway tracks BI, therefore potentially able to move over time, due to the most varied factors, with respect to their initial position corresponding to the configuration of installation of the tracks BI.

Then the optical control unit CO, by processing the position and the spatial coordinates, as detected by the same optical control unit CO, of the reference point P1, fixed, defined by the optical measuring device or tool 20 fixed to the screw pole 10 screwed into the ground T, and the position and the spatial coordinates, also detected by the optical control unit CO, of the reference point or points P2, potentially able to move over time, defined on the railway tracks BI, calculates, in particular through triangulation formulas, the effective distance between these reference points P1 and P2, so as to accurately determine the topography or the actual layout of the railway tracks BI.

In order to accurately detect the position of the reference points P1 and P2, to be processed to determine the exact topography and geometry of the tracks BI, the optical control unit CO of the optical measuring system SM is advantageously associated with a satellite positioning system, GPS type (from Global Positioning System), symbolically represented in Fig. 1A with a SAT satellite.

### Use of the pole of the invention for the execution of topographic surveys aimed at verifying the track layout of a railway line

In the effective use of the screw pole 10 of the invention, a plurality of screw poles 10 are initially screwed, manually or by means of a motorized screwdriver, as indicated in the drawings by an arrow f, into respective holes previously prepared and made, by means of a drilling or perforating tool, in the ground T, at regular spatial intervals, along one or both sides of an railway line LF.

In this way, the screw poles 10, once screwed into the ground T, constitute a plurality of stable bases, fixed, i.e. not subjected to movement over time, arranged at regular intervals along the sides of the railway line LF, wherein these bases are suitable for subsequently fixing on them in a stable and safe manner the optical measuring device or tool 20 which defines the reference point P1, fixed, intended to be detected by the optical measuring system SM which detects the topographic layout of the railway tracks BI.

The optical measuring device or tool 20 is then fixed by an operator to the screw pole 10, screwed into the ground T, which is positioned in the area of the portion or section of the railway tracks BI, whose actual configuration and layout is to be checked and controlled.

In particular, in this phase, the operator places the optical measuring device or tool 20 above the screw pole 10, screwed into the ground T, so as to insert the heads 22a", of greater diameter, of the pegs 22a protruding from the lower plate 22 of the optical measuring device or tool 20, in the slots 12a, defined by the upper plate 12 of the screw pole 10 screwed into the ground T.

Then the operator rotates the optical measuring device or tool 20 with respect to the screw pole 10, screwed into the ground T, and, when the smaller diameter stems 22a' of the pegs 22a stop at the end of the angular stroke against the walls of the corresponding slots 12a, he manually activates the levers 22b so as to press the heads 22a" of the pegs 22a against the upper plate 12 of the screw pole 10 and therefore firmly lock the optical measuring device or tool 20, in the angular position reached, with respect to the screw pole 10 screwed into the ground T.

In this phase a plug or pin, not shown in the drawings, can be inserted in a corresponding hole, indicated on 12c and shown in Fig. 4 - sect. (c), formed in the upper plate 12 of the screw pole 10, in order to prevent any relative rotation between the optical measuring device or tool 20 and the screw pole 10 screwed into the ground T.

Subsequently, the optical measuring system SM, of which the optical measuring device or tool 20 fixed to the screw pole 10 is a part, detects the position and the spatial coordinates of both the reference point P1 defined by the optical measuring device or tool 20 fixed to the screw pole 10 screwed into the ground T and of the reference points P2 established on the railway tracks BI to be checked, and on the basis of the data detected with these surveys calculates and measures the effective distance between the reference point P1, defined by the optical measuring device or tool 20, and the reference points P2 defined on the tracks BI, whose path and layout must be checked.

In this way, the optical measuring system SM detects with absolute precision the actual topographic configuration of the layout or path of the tracks BI of the railway line, and then compares this actual topographic configuration with the correct nominal configuration corresponding to the initial configuration of installation of the railway tracks Bl.

Therefore, based on this comparison, the optical measuring system SM determines whether the tracks BI rails are still correctly positioned, i.e. whether they are within the permissible tolerance range with respect to the initial installation configuration, whereby it is not necessary to intervene for repositioning them since the railway line is in a safe condition, or if on the contrary the tracks are no longer correctly positioned, i.e. they are no longer within the permissible tolerance range, whereby action must be taken to reposition them correctly.

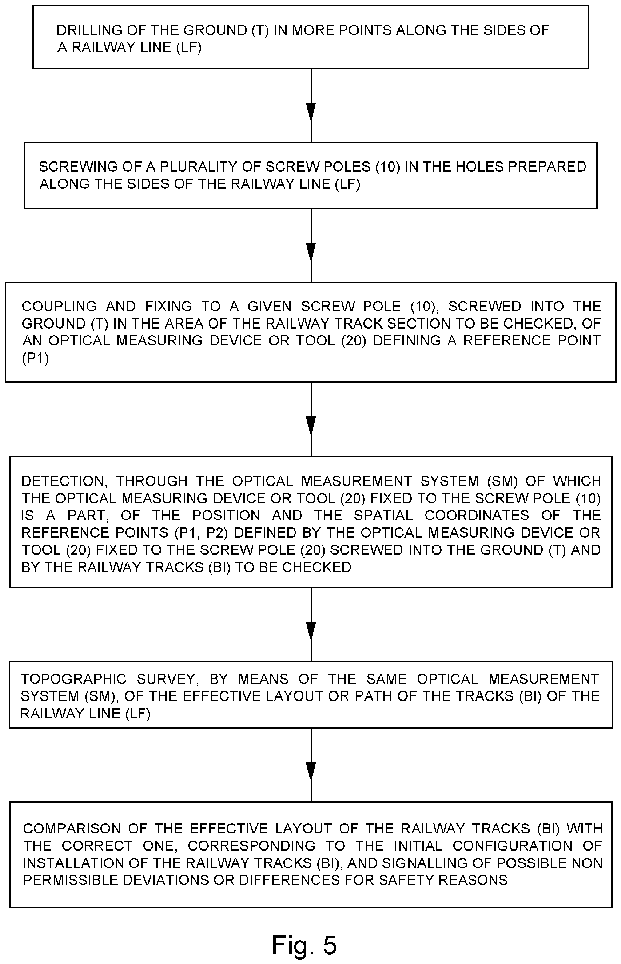

For the sake clarity, the block operating diagram of Fig. 5 briefly shows the use, previously described, of the screw pole 10 and its function within the wider optical measuring system SM of which the screw pole 10, screwed in the ground T on the sides of the railway line LF, is an essential part.

It is therefore clear from the previous description that the screw pole 10, which can be screwed into the ground T along the sides of a railway line LF, as well as the other aspects of the invention, i.e. the corresponding optical measuring device or tool 20 and the corresponding wider optical measuring system SM fully achieve the intended objects, and in particular allow the execution of extremely precise and reliable topographic surveys of the tracks BI of the railway line LF, in a short time and at a low cost.

### Further uses of the pole of the invention

It is equally clear that the inventive concept, which is at the basis of and characterizes the screw pole of the invention, cannot be limited and restricted to what has been described and illustrated heretofore with reference to its specific preferred embodiment indicated by the reference numeral 10, but it can also be extended to other embodiments, applications and uses, alternative and/or complementary to those already described, aimed at checking the layout of the railway tracks and in general the state and actual conditions of a railway line.

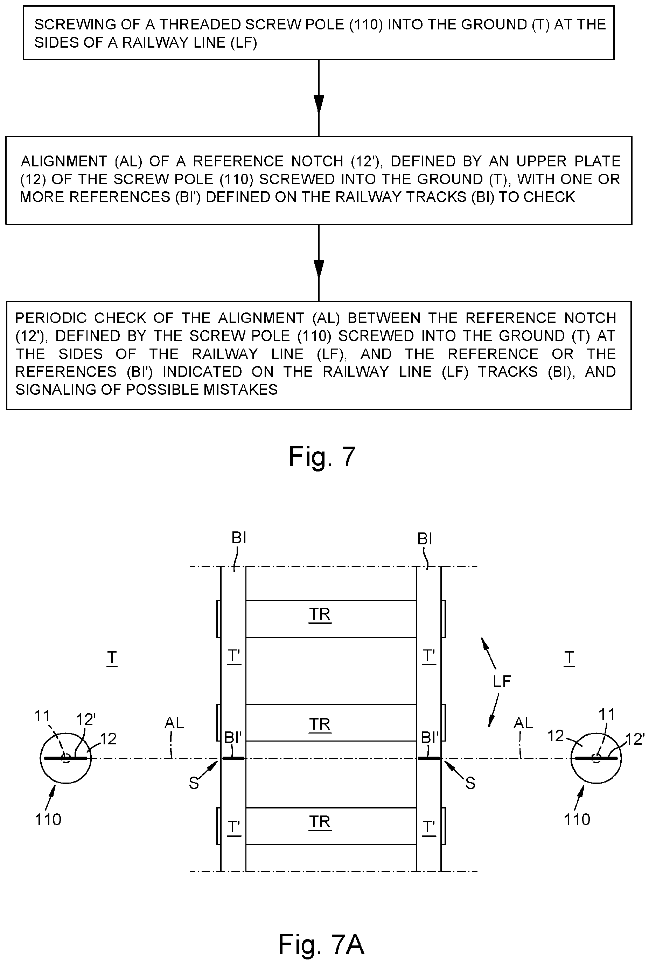

For example, the screw pole of the invention, in a further embodiment thereof indicated with 110 and schematized in Fig. 7A, can be advantageously used, with its upper plate 12 fixed to the lower threaded stem 11, in turn screwed into the ground T at the sides of the railway line LF, as a reference element to be used to periodically check over time the layout of the tracks BI of the same railway line LF.

In detail, on the basis of this further use illustrated in the block operating diagram of Fig. 7, the upper plate 12 of the screw post 110, screwed into the ground T, has a reference notch 12' which, upon installation, i.e. at the screwing of the screw pole 110 into the ground T, is suitably oriented and aligned with one or more references BI' indicated on the tracks BI of the railway line LF to be checked.

Then this alignment, indicated with AL in Fig. 7A, between the reference notch 12', exhibited by the upper plate 12 of the screw pole 110 screwed into the ground T at the sides of the railway line LF, and the reference or references BI' indicated on the tracks BI of the railway line LF, is periodically checked and verified, in successive times, in order to ascertain whether the layout of the tracks BI of the railway line LF is still in conformity with its correct initial configuration, in turn corresponding to the installation configuration of the railways tracks BI.

For example, the references BI', defined on the railway tracks BI, can correspond to the welds S between the various sections T' of which each track BI is made.

Therefore, if from this check it appears that the alignment AL has been preserved and is still present, this means that the effective layout of the tracks BI is correctly in accordance with its initial installation layout or path, whereby the railway line LF is in a safe condition and therefore it is not necessary to intervene to reposition the respective railway tracks BI.

On the other hand, if, on the contrary, the check shows that the alignment AL between the reference notch 12', exhibited by the upper plate 12, and the references Bl', indicated on the railway tracks BI, has been altered to some extent and thereby it is not present, this means that the layout of the tracks BI is no longer correctly conforming to its initial installation layout, whereby the railway line is not in a safe condition and it is therefore necessary to intervene to reposition the railway tracks BI.

Advantageously, as shown in Fig. 7A, a pair of screw poles 110 can be screwed into the ground T along both sides of the railway line so as to be aligned with the references BI' defined on the railway tracks BI.

Furthermore, in the context of the possible further uses of the screw pole of the invention, aimed at periodically checking over time the correct layout or path of the railway tracks BI, it is also mentioned that in which the upper plate 12 of the screw pole 10, screwed into the ground T, is advantageously used to fix on the same screw pole 10 the specific optical apparatuses or equipments, such as an optical prism or others, which are part of the wider optical measuring system SM having the function of carrying out the topographic surveys of the railway tracks BI to be checked.

### Variants

Of course, without prejudice to the principle and the basic technical concept of the screw pole according to the present invention, it is also clear that the respective embodiments and uses may be subject to variations, modifications and improvements with respect to what has been described and illustrated heretofore, without departing from the scope of the invention itself.

For example, the means for coupling and fixing the optical measuring device or tool 20 to the screw pole 10 screwed into the ground T can be different from those described above, comprising a plurality of pegs or pins, provided in the optical measuring device or tool 20, suitable to be inserted and to cooperate with a plurality of slots, provided in the screw pole 10.

Similarly, also the locking means for locking the optical measuring device or tool 20 with respect to the screw pole 10, after rotating the same measuring device or optical tool 20 relatively to the screw pole 20 screwed into the ground T, can be different from those, previously described in relation to the screw pole 10, comprising a plurality of levers 22b or a plurality of spring couplings 22d manually operated by an operator to press a plurality of corresponding pegs 22a, protruding from the lower plate 22 of the optical measuring device or tool 20, against the upper plate 22 of the screw pole 10.

## Claims

1. Screw pole (10), suitable to be installed along the sides of a railway line (LF) for the execution of topographic surveys aimed at detecting and verifying the track layout (Bl) of the railway line (LF), comprising:
- a stem (11), threaded (11a), allowing to screw (f) the screw pole (10) into the ground (T) in the area of or adjacent to the ballast (BA), that is to the gravel embankment of the railway line (LF); and
- coupling and fixing means (12, 12a), associated with an upper end (11b) of said stem (11), for coupling and fixing to the screw pole (10), once screwed into the ground (T) at the sides of the railway line (LF), an optical measuring device or tool (20), defining a reference point (P1), included in and part of a wider optical measurement system (SM) to measure and detect the topographical track layout (Bl) of the railway line (LF);
wherein said coupling and fixing means comprise an upper plate (12), fixed to, extended transversely and protruding from said upper end (11b) of said stem (11);
wherein said upper plate (12) has a plurality of slots (12a) corresponding to a plurality of corresponding pegs (22a), each having a stem (22a') of smaller diameter and a head (22a") of greater diameter, projecting from a lower plate (22) of said optical measuring device or tool (20);
wherein said plurality of slots (12a), of the screw pole (10), are adapted to cooperate with said plurality of corresponding pegs (22a) of the optical measuring device or tool (20), by inserting the pegs (22a) in the slots (12a) and then rotating the optical measuring device or tool (20) with respect to the screw pole (10), so as to couple and fix the optical measuring device or tool (20) to the screw pole (10) screwed into the ground (T) at the sides of the railway line (LF); and
wherein each of said slots (12a) has a wider portion(12a') and a narrower portion (12a");
whereby each peg (22a), protruding from the lower plate (22) of the optical measuring device or tool (20), is able to be inserted with its head (22a"), of greater diameter, in the wider portion (12a') of the corresponding slot (12a), formed in the upper plate (12) of the screw pole (10), and then to cooperate with its stem (22a'), of smaller diameter, with the narrower portion (12a") of the same slot (12a), when the optical measuring device or tool (20) is rotated with respect to the screw pole (10) in order to connect these two parts to each other.

2. Optical measuring device or tool (20) for performing topographic surveys aimed at detecting and verifying the track layout (BI) of a railway line, including:
- a measuring pole (21); and
- a lower plate (22), fixed to a lower end of said measuring pole (21);
wherein said optical measuring device or tool (20) has, at an upper end of the measuring pole (21), a reference point (P1), in particular defined by an optical prism fixed to said measuring pole (21), whose position is detected optically and processed by a wider optical measurement system (SM), of which the optical measuring device or tool (20) is part, in order to detect the topographical track layout (BI) of the railway line (LF);
wherein said lower plate (22) has a plurality of pegs (22a), projecting from the same lower plate (22);
wherein said pegs (22a) each have a smaller diameter stem (22a') and a larger diameter head (22a") and are able to cooperate with the corresponding slots (12a) defined by the upper plate (12) of a screw pole (10), according to claim 1, screwed into the ground (T) at the sides of the railway line, by inserting the pegs (22a) in said corresponding slots (12a) and then rotating the optical measuring device or tool (20) with respect to the screw pole (10) so as to couple and fix the optical measuring device or tool (20 ) to the screw pole (10) screwed into the ground (T) on the sides of the railway line (LF); and
wherein, with the optical measuring device or tool (20) coupled and fixed to the screw pole (10) screwed into the ground (T) at the sides of the railway line (LF), said measuring pole (21) exhibits an elongated configuration which extends vertically, coaxially to and over the same screw pole (10).

3. Reference and measuring pole (30) consisting of a screw pole (10) according to claim 1, and of an optical measuring device or tool (20), according to claim 2, coupled and fixed to the upper plate (12) of the screw pole (10) screwed into the ground (T) at the sides of the railway (LF).

4. Reference and measuring pole (30) according to claim 3, further comprising manual blocking means (22b; 22d), included in said optical measuring device or tool (20), for blocking the latter with respect to and against said screw pole (10), after having inserted the pegs (22a) projecting from the lower plate (22) of the optical measuring device or tool (20), in the corresponding slots (12a) of the upper plate (12) of the screw pole (10) and then having rotated the optical measuring device or tool (20) with respect to the screw pole (10), so as to fix and firmly fix said optical measuring device or tool (20) to the same screw pole (10) screwed into the ground (T) at the sides of the railway line (LF).

5. Reference and measuring pole (30) according to claim 4, wherein said manual blocking means comprise a plurality of levers (22b), manually operable, corresponding to the pegs (22a), exhibited by the lower plate (22) of the optical measuring device or tool (20), and the slots (12a), defined by the upper plate (12) of the screw pole (10);
wherein said levers (22b) are suitable to be actuated manually, after having rotated said optical measuring device or tool (20) relatively to said screw pole (10), so as to press the head (22a") of each peg (22a) against the upper plate (12), acting as a counter plate, of the screw pole (10) screwed into the ground (T) at the sides of the railway line (LF),
or, alternatively, said manual blocking means comprise a plurality of spring hooks (22d), still corresponding to the pegs (22a), exhibited by the lower plate (22) of the optical measuring device or tool (20), and the slots (12a), defined by the upper plate (12) of the screw pole (10).

6. Reference and measuring pole (30) according to any one of claims 3 to 5, wherein the measuring pole (21) of said optical measuring device or tool (20), fixed to the screw pole (10, has along its axial extension one or more handles (23) to allow an operator to rotate the optical measuring device or tool (20) so as to couple it with the screw pole (10) screwed into the ground (T) at the sides of the railway line (LF).

7. Optical measuring system (SM) for performing topographic surveys aimed at detecting and verifying the track layout (BI) of a railway line (LF), comprising a plurality of screw poles (10), according to claim 1, screwed into the ground (T) at the sides of a railway line (LF) and at least one optical measuring device or tool (20), according to claim 2, adapted to be stably fixed to each of said screw poles (10), screwed into the ground (T), in order to detect and verify the topographical layout of the tracks (BI) of the railway line (LF).

## Patentansprüche

1. Schraubmast (10), geeignet zur Installation entlang der Seiten einer Eisenbahnlinie (LF) zum Ausführen topografischer Vermessungen zum Erfassen und Überprüfen des Gleisverlaufs (BI) der Eisenbahnlinie (LF), umfassend:
- einen Schaft (11) mit Gewinde (11a), der das Einschrauben (f) des Schraubmasts (10) in den Boden (T) im Bereich oder neben dem Schotter (BA), d. h. an der Kiesböschung der Eisenbahnlinie (LF), ermöglicht; und
- Kopplungs- und Befestigungsmittel (12, 12a), die einem oberen Ende (11b) des Schafts (11) zugeordnet sind, zum Koppeln und Befestigen an dem Schraubmast (10), sobald dieser in den Boden (T) an den Seiten der Eisenbahnlinie (LF) eingeschraubt ist, ein optisches Messgerät oder Werkzeug (20), das einen Referenzpunkt (P1) definiert und in einem breiteren optischen Messsystem (SM) beinhaltet und Teil desselben ist, um den topografischen Gleisverlauf (BI) der Eisenbahnlinie (LF) zu messen und zu erfassen;
wobei die Kopplungs- und Befestigungsmittel eine obere Platte (12) umfassen, die an dem oberen Ende (11b) des Schafts (11) befestigt ist, sich quer erstreckt und von diesem vorsteht;
wobei die obere Platte (12) eine Vielzahl von Schlitzen (12a) aufweist, die einer Vielzahl von entsprechenden Stiften (22a) entsprechen, von denen jeder einen Schaft (22a') mit kleinerem Durchmesser und einen Kopf (22a") mit größerem Durchmesser aufweist, die von einer unteren Platte (22) des optischen Messgeräts oder Werkzeugs (20) abstehen;
wobei die Vielzahl von Schlitzen (12a) des Schraubmasts (10) dazu ausgelegt ist, mit der Vielzahl von entsprechenden Stiften (22a) des optischen Messgeräts oder Werkzeugs (20) zusammenzuwirken, indem die Stifte (22a) in die Schlitze (12a) eingeführt werden und dann das optische Messgerät oder Werkzeug (20) in Bezug auf den Schraubmast (10) gedreht wird, um so das optische Messgerät oder Werkzeug (20) an den Schraubmast (10) zu koppeln und daran zu befestigen, der in den Boden (T) an den Seiten der Eisenbahnlinie (LF) eingeschraubt ist; und
wobei jeder der Schlitze (12a) einen breiteren Abschnitt (12a') und einen schmaleren Abschnitt (12a") aufweist;
wobei jeder Stift (22a), der aus der unteren Platte (22) des optischen Messgeräts oder Werkzeugs (20) vorsteht, mit seinem Kopf (22a") mit größerem Durchmesser in den breiteren Abschnitt (12a') des entsprechenden Schlitzes (12a) eingeführt werden kann, der in der oberen Platte (12) des Schraubmasts (10) ausgebildet ist, und dann mit seinem Schaft (22a') mit kleinerem Durchmesser mit dem schmaleren Abschnitt (12a") desselben Schlitzes (12a) zusammenwirken kann, wenn das optische Messgerät oder Werkzeug (20) in Bezug auf den Schraubmast (10) gedreht wird, um diese beiden Teile miteinander zu verbinden.

2. Optisches Messgerät oder Werkzeug (20) zum Durchführen topografischer Vermessungen zum Erfassen und Überprüfen des Gleisverlaufs (BI) einer Eisenbahnlinie, beinhaltend:
- eine Messstange (21); und
- eine untere Platte (22), die an einem unteren Ende der Messstange (21) befestigt ist;
wobei das optische Messgerät oder Werkzeug (20) an einem oberen Ende der Messstange (21) einen Referenzpunkt (P1) aufweist, der insbesondere durch ein an der Messstange (21) befestigtes optisches Prisma definiert ist, dessen Position durch ein breiteres optisches Messsystem (SM), zu dem das optische Messgerät oder Werkzeug (20) gehört, optisch erfasst und verarbeitet wird, um den topografischen Gleisverlauf (BI) der Eisenbahnlinie (LF) zu erfassen;
wobei die untere Platte (22) eine Vielzahl von Stiften (22a) aufweist, die von derselben unteren Platte (22) vorstehen;
wobei die Stifte (22a) jeweils einen Schaft (22a') mit kleinerem Durchmesser und einen Kopf (22a") mit größerem Durchmesser aufweisen und mit den entsprechenden Schlitzen (12a) zusammenwirken können, die durch die obere Platte (12) eines Schraubmasts (10) nach Anspruch 1 definiert sind, der in den Boden (T) an den Seiten der Eisenbahnlinie eingeschraubt ist, indem die Stifte (22a) in die entsprechenden Schlitze (12a) eingeführt und dann das optische Messgerät oder Werkzeug (20) in Bezug auf den Schraubmast (10) gedreht wird, um so das optische Messgerät oder Werkzeug (20) an den Schraubmast (10) zu koppeln und daran zu befestigen, der in den Boden (T) an den Seiten der Eisenbahnlinie (LF) eingeschraubt ist; und
wobei, während das optische Messgerät oder Werkzeug (20) an den Schraubmast (10) gekoppelt und daran befestigt ist, der in den Boden (T) an den Seiten der Eisenbahnlinie (LF) eingeschraubt ist, die Messstange (21) eine längliche Konfiguration aufweist, die sich vertikal, koaxial zu und über denselben Schraubmast (10) erstreckt.

3. Referenz- und Messstange (30), bestehend aus einem Schraubmast (10) nach Anspruch 1 und einem optischen Messgerät oder Werkzeug (20) nach Anspruch 2, das an die obere Platte (12) des Schraubmasts (10) gekoppelt und daran befestigt ist, der an den Seiten der Eisenbahn (LF) in den Boden (T) eingeschraubt ist.

4. Referenz- und Messstange (30) nach Anspruch 3, die weiter manuelle Blockiermittel (22b; 22d) umfasst, die in dem optischen Messgerät oder Werkzeug (20) beinhaltet sind, um letzteres in Bezug auf und gegen den Schraubmast (10) zu blockieren, nachdem die von der unteren Platte (22) des optischen Messgeräts oder Werkzeugs (20) vorstehenden Stifte (22a) in die entsprechenden Schlitze (12a) der oberen Platte (12) des Schraubmasts (10) eingeführt wurden, und danach das optische Messgerät oder Werkzeug (20) in Bezug auf den Schraubmast (10) gedreht wurde, um das optische Messgerät oder Werkzeug (20) an demselben in den Boden eingeschraubten Schraubmast (10) zu befestigen und fest zu befestigen, der an den Seiten der Eisenbahnlinie (LF) in den Boden (T) eingeschraubt ist.

5. Referenz- und Messstange (30) nach Anspruch 4, wobei die manuellen Blockiermittel eine Vielzahl von manuell betätigbaren Hebeln (22b) umfassen, die den Stiften (22a), die sich an der unteren Platte (22) des optischen Messgeräts oder Werkzeugs (20) befinden, und den Schlitzen (12a), die durch die obere Platte (12) des Schraubmasts (10) definiert sind, entsprechen;
wobei die Hebel (22b) dazu geeignet sind, manuell betätigt zu werden, nachdem das optische Messgerät oder Werkzeug (20) relativ zum Schraubmast (10) gedreht wurde, um den Kopf (22a") jedes Stifts (22a) gegen die als Gegenplatte wirkende obere Platte (12) des Schraubmasts (10) zu pressen, der an den Seiten der Eisenbahnlinie (LF) in den Boden (T) eingeschraubt ist,
oder alternativ die manuellen Blockiermittel eine Vielzahl von Federhaken (22d) umfassen, die immer noch den Stiften (22a), die sich an der unteren Platte (22) des optischen Messgeräts oder Werkzeugs (20) befinden, und den Schlitzen (12a), die durch die obere Platte (12) des Schraubmasts (10) definiert sind, entsprechen.

6. Referenz- und Messstange (30) nach einem der Ansprüche 3 bis 5, wobei die am Schraubmast (10) befestigte Messstange (21) des optischen Messgeräts oder Werkzeugs (20) entlang ihrer axialen Erstreckung einen oder mehrere Griffe (23) aufweist, die es einem Bediener ermöglichen, das optische Messgerät oder Werkzeug (20) zu drehen, um es mit dem Schraubmast (10) zu koppeln, der an den Seiten der Eisenbahnlinie (LF) in den Boden (T) eingeschraubt ist.

7. Optisches Messsystem (SM) zum Durchführen topografischer Vermessungen zum Erfassen und Überprüfen des Gleisverlaufs (BI) einer Eisenbahnlinie (LF), umfassend eine Vielzahl von Schraubmasten (10) nach Anspruch 1, die an den Seiten einer Eisenbahnlinie (LF) in den Boden (T) eingeschraubt sind, und mindestens ein optisches Messgerät oder Werkzeug (20) nach Anspruch 2, das angepasst ist, an jedem der Schraubmasten (10) stabil befestigt zu werden, die in den Boden (T) eingeschraubt sind, um den topografischen Verlauf der Gleise (BI) der Eisenbahnlinie (LF) zu erfassen und zu überprüfen.

## Revendications

1. Poteau à visser (10), apte à être installé le long des bords d'une ligne de chemin de fer (LF) pour l'exécution de levés topographiques visant à détecter et vérifier la disposition des voies (BI) de la ligne de chemin de fer (LF), comprenant :
- une tige (11), filetée (11a), permettant de visser (f) le poteau à visser (10) dans le sol (T) au niveau du ou de manière adjacente au ballast (BA), c'est-à-dire au remblai en gravier de la ligne de chemin de fer (LF) ; et
- des moyens de couplage et de fixation (12, 12a), associés à une extrémité supérieure (11b) de ladite tige (11), pour le couplage et la fixation au poteau à visser (10), une fois vissé dans le sol (T) sur les bords de la ligne de chemin de fer (LF), d'un dispositif ou outil de mesure optique (20), définissant un point de référence (P1), inclus dans et faisant partie d'un plus grand système de mesure optique (SM) pour mesurer et détecter la disposition topographique des voies (BI) de la ligne de chemin de fer (LF) ;
dans lequel lesdits moyens de couplage et de fixation comprennent une plaque supérieure (12), fixée à, s'étendant transversalement depuis et faisant saillie de ladite extrémité supérieure (11b) de ladite tige (11) ;
dans lequel ladite plaque supérieure (12) présente une pluralité de fentes (12a) correspondant à une pluralité de chevilles correspondantes (22a), chacune présentant une tige (22a') de plus petit diamètre et une tête (22a") de plus grand diamètre, faisant saillie à partir d'une plaque inférieure (22) dudit dispositif ou outil de mesure optique (20) ;
dans lequel ladite pluralité de fentes (12a), du poteau à visser (10), sont adaptées pour coopérer avec ladite pluralité de chevilles correspondantes (22a) du dispositif ou outil de mesure optique (20), en insérant les chevilles (22a) dans les fentes (12a) puis en faisant tourner le dispositif ou outil de mesure optique (20) par rapport au poteau à visser (10), de manière à coupler et fixer le dispositif ou outil de mesure optique (20) au poteau à visser (10) vissé dans le sol (T) sur les bords de la ligne de chemin de fer (LF) ; et
dans lequel chacune desdites fentes (12a) présente une portion plus large (12a') et une portion plus étroite (12a") ;
selon lequel chaque cheville (22a), faisant saillie à partir de la plaque inférieure (22) du dispositif ou outil de mesure optique (20), peut être insérée avec sa tête (22a"), de plus grand diamètre, dans la portion plus large (12a') de la fente correspondante (12a), formée dans la plaque supérieure (12) du poteau à visser (10), puis coopérer avec sa tige (22a'), de plus petit diamètre, avec la portion plus étroite (12a") de la même fente (12a), lorsque le dispositif ou outil de mesure optique (20) est entraîné en rotation par rapport au poteau à visser (10) pour relier ces deux parties l'une à l'autre.

2. Dispositif ou outil de mesure optique (20) pour effectuer des levés topographiques visant à détecter et vérifier la disposition des voies (BI) d'une ligne de chemin de fer, incluant :
- un poteau de mesure (21) ; et
- une plaque inférieure (22), fixée à une extrémité inférieure dudit poteau de mesure (21) ;
dans lequel ledit dispositif ou outil de mesure optique (20) présente, à une extrémité supérieure du poteau de mesure (21), un point de référence (P1), en particulier défini par un prisme optique fixé audit poteau de mesure (21), dont la position est détectée optiquement et traitée par un plus grand système de mesure optique (SM), dont le dispositif ou outil de mesure optique (20) fait partie, afin de détecter la disposition topographique des voies (BI) de la ligne de chemin de fer (LF) ;
dans lequel ladite plaque inférieure (22) présente une pluralité de chevilles (22a), faisant saillie à partir de la même plaque inférieure (22) ;
dans lequel lesdites chevilles (22a) présentent chacune une tige de plus petit diamètre (22a') et une tête de plus grand diamètre (22a") et peuvent coopérer avec les fentes correspondantes (12a) définies par la plaque supérieure (12) d'un poteau à visser (10), selon la revendication 1, vissé dans le sol (T) sur les bords de la ligne de chemin de fer, en insérant les chevilles (22a) dans lesdites fentes correspondantes (12a) puis en faisant tourner le dispositif ou outil de mesure optique (20) par rapport au poteau à visser (10) de manière à coupler et fixer le dispositif ou outil de mesure optique (20) au poteau à visser (10) vissé dans le sol (T) sur les bords de la ligne de chemin de fer (LF) ; et
dans lequel, avec le dispositif ou outil de mesure optique (20) couplé et fixé au poteau à visser (10) vissé dans le sol (T) sur les bords de la ligne de chemin de fer (LF), ledit poteau de mesure (21) présente une configuration allongée qui s'étend verticalement, coaxialement à et sur le même poteau à visser (10).

3. Poteau de référence et de mesure (30) consistant en un poteau à visser (10) selon la revendication 1, et en un dispositif ou outil de mesure optique (20), selon la revendication 2, couplé et fixé à la plaque supérieure (12) du poteau à visser (10) vissé dans le sol (T) sur les bords de la ligne de chemin de fer (LF).

4. Poteau de référence et de mesure (30) selon la revendication 3, comprenant en outre des moyens de blocage manuel (22b ; 22d), inclus dans ledit dispositif ou outil de mesure optique (20), pour bloquer ce dernier par rapport à et contre ledit poteau à visser (10), après avoir inséré les chevilles (22a) en saillie à partir de la plaque inférieure (22) du dispositif ou outil de mesure optique (20), dans les fentes correspondantes (12a) de la plaque supérieure (12) du poteau à visser (10) puis avoir fait tourner le dispositif ou outil de mesure optique (20) par rapport au poteau à visser (10), de manière à fixer et fixer fermement ledit dispositif ou outil de mesure optique (20) au même poteau à visser (10) vissé dans le sol (T) sur les bords de la ligne de chemin de fer (LF).

5. Poteau de référence et de mesure (30) selon la revendication 4, dans lequel lesdits moyens de blocage manuel comprennent une pluralité de leviers (22b), actionnables manuellement, correspondant aux chevilles (22a), présentées par la plaque inférieure (22) du dispositif ou outil de mesure optique (20), et les fentes (12a), définies par la plaque supérieure (12) du poteau à visser (10) ;
dans lequel lesdits leviers (22b) sont aptes à être actionnés manuellement, après avoir fait tourner ledit dispositif ou outil de mesure optique (20) par rapport audit poteau à visser (10), de manière à plaquer la tête (22a") de chaque cheville (22a) contre la plaque supérieure (12), faisant office de contre-plaque, du poteau à visser (10) vissé dans le sol (T) sur les bords de la ligne de chemin de fer (LF),
ou, alternativement, lesdits moyens de blocage manuel comprennent une pluralité d'ancrages à ressort (22d), correspondant toujours aux chevilles (22a), présentées par la plaque inférieure (22) du dispositif ou outil de mesure optique (20), et les fentes (12a), définies par la plaque supérieure (12) du poteau à visser (10).

6. Poteau de référence et de mesure (30) selon l'une quelconque des revendications 3 à 5, dans lequel le poteau de mesure (21) dudit dispositif ou outil de mesure optique (20), fixé au poteau à visser (10), présente le long de son extension axiale une ou plusieurs poignées (23) pour permettre à un opérateur de faire tourner le dispositif ou outil de mesure optique (20) afin de le coupler au poteau à visser (10) vissé dans le sol (T) sur les bords de la ligne de chemin de fer (LF).

7. Système de mesure optique (SM) pour effectuer des levés topographiques visant à détecter et vérifier la disposition des voies (BI) d'une ligne de chemin de fer (LF), comprenant une pluralité de poteaux à visser (10), selon la revendication 1, vissés dans le sol (T) sur les bords d'une ligne de chemin de fer (LF) et au moins un dispositif ou outil de mesure optique (20), selon la revendication 2, adapté pour être fixé de manière stable à chacun desdits poteaux à visser (10), vissés dans le sol (T), afin de détecter et vérifier la disposition topographique des voies (BI) de la ligne de chemin de fer (LF).
